# EUROPÄISCHE PATENTANMELDUNG

(11) **EP 1 411 369 A1**
(43) Veröffentlichungstag der Anmeldung: **21.04.2004**
(21) Anmeldenummer: 03016179.8
(22) Anmeldetag: 17.07.2003
(51) Int. Cl.: G01S 13/93, G01S 7/03

(54) **Radarempfänger und Herstellungsverfahren für einen solchen Radar**

(30) Priorität: 16.10.2002 DE 10248915
(71) Anmelder: Valeo Schalter und Sensoren GmbH, 74321 Bietigheim-Bissingen (DE)
(72) Erfinder: Biehlman, Bernd, 71638 Ludwigsburg (DE); Walz, Dirk, 72654 Neckartenzlingen (DE); Künzler, Frank, 76703 Kraichtal (DE); Papziner, Uwe, 71739 Oberriexingen (DE)
(74) Vertreter: Dreiss, Fuhlendorf, Steimle & Becker

(57) **Zusammenfassung**

Die Erfindung betrifft einen Radarsensor und ein Verfahren zur Herstellung eines Radarsensors für ein Fahrzeug, insbesondere zur Anordnung an ein Karosserieteil eines Kraftfahrzeuges, mit einem nach oben offenen, wannenförmigen Gehäuse, mit einer auf der Innenseite des Gehäuses, im Bereich des Gehäusebodens angeordneten Antenne, mit einem mit der Antenne gekoppelten Hochfrequenzteil und mit einem mit dem Hochfrequenzteil verbundenen Niederfrequenzteil, wobei das Gehäuseinnere mit einer feuchtigkeitsdichten Füllmasse vergossen ist.

## Beschreibung

Die Erfindung betrifft einen Radarsensor für ein Fahrzeug, insbesondere zur Anordnung an ein Karosserieteil eines Kraftfahrzeuges. Derartige Sensoren sind in vielfältiger Art und Weise bekannt. Die Sensoren umfassen in der Regel ein Hochfrequenz- und ein Niederfrequenzteil. Das Hochfrequenzteil generiert hochfrequente Signale im Bereich von ca. 10 bis 80 Gigahertz. Die Signale werden über Antennen versandt und empfangen. Die hochfrequenten, empfangenen Signale werden umgesetzt und auf eine Niederfrequenz heruntergemischt. Die Verarbeitung der niederfrequenten Signale erfolgt im Niederfrequenzteil.
Bei bekannten Radarsensoren hat sich als problematisch herausgestellt, den Radarsensor gegen Feuchtigkeit dicht auszubilden. Insbesondere Radarsensoren, die in Karosserieteilen, beispielsweise in einem Stoßfänger, eines Fahrzeuges angeordnet werden, sind extremen Umwelteinflüssen, und insbesondere Feuchtigkeit, ausgesetzt.

Der vorliegenden Erfindung liegt deshalb die Aufgabe zugrunde, einen Radarsensor bereitzustellen, der eine große Sicherheit gegen Einwirkungen von Umgebungsfeuchtigkeit gewährleistet. Der Radarsensor soll zudem geringe Herstellungskosten haben.

Diese Aufgabe wird gelöst durch einen Radarsensor mit einem wannenförmigen Gehäuse, mit einer auf der Innenseite des Gehäuses, im Bereich des Gehäusebodens angeordneten Antenne, mit einem mit der Antenne gekoppelten Hochfrequenzteil und mit einem mit dem Hochfrequenzteil verbundenen Niederfrequenzteil, wobei das Gehäuseinnere wenigstens teilweise mit einer feuchtigkeitsdichten Füllmasse vergossen ist. Vorzugsweise ist das Gehäuseinnere und die Gehäuseöffnung vollständig vergossen. Durch das Vorsehen eines wannenförmigen Gehäuses, in dem die Bauteile des Radarsensors angeordnet sind, und durch Vergießen des Gehäuseinneren mit einer feuchtigkeitsdichten Füllmasse, wird gewährleistet, dass selbst bei Extrembeanspruchungen keine Feuchtigkeit in den Radarsensor eindringen und an die elektronischen Bauteile des Radarsensors gelangen kann. Die Antenne sendet und empfängt Signale durch den Gehäuseboden. Sie kann unmittelbar an den Boden des Gehäuses angrenzen.

Vorteilhafterweise ist das Wannengehäuse einstückig ausgebildet. Hierdurch wird gewährleistet, dass keine Fügestellen vorhanden sind, durch die Feuchtigkeit in den Radarsensor eindringen könnte. Das Gehäuse kann hierbei aus Kunststoff und zylindrisch ausgebildet sein. Im Querschnitt kann das Gehäuse beispielsweise und/oder rechteckig ausgebildet sein.

Bei einer bevorzugten Ausführungsform ist das Niederfrequenzteil oberhalb des Hochfrequenzteils angeordnet. Das heißt, dass das Hochfrequenzteil zwischen dem Boden des Gehäuses und dem Niederfrequenzteil liegt. Die Antenne kann dabei an dem Hochfrequenzteil angeordnet sein oder ist in das Hochfrequenzteil integriert.

Eine weitere, vorteilhafte Ausgestaltung der Erfindung zeichnet sich dadurch aus, dass das Hochfrequenzteil eine Hochfrequenzplatine umfasst und dass das Niederfrequenzteil eine Niederfrequenzplatine umfasst, wobei die Hochfrequenzplatine in dem dem Gehäuseboden zugewandten Bereich und die Niederfrequenzplatine oberhalb der Hochfrequenzplatine angeordnet ist. Der Sensor umfasst folglich zwei verschiedene Platinen, die vorzugsweise parallel zueinander, übereinander im Gehäuse liegen.

Um eine negative Beeinflussung des Hochfrequenzteils durch die Füllmasse zu verhindern und zur besseren Abschirmung ist bei einer weiteren Ausführungsform der Erfindung das Hochfrequenzteil von einer Schutzhaube abgedeckt. Die Schutzhaube kann beispielsweise zwischen dem Hochfrequenzteil und dem Niederfrequenzteil liegen. Bei Vorsehen einer Hochfrequenzplatine ist denkbar, dass sich die Schutzhaube über die Hochfrequenzplatine erstreckt. Die auf der Hochfrequenzplatine angeordneten Bauteile kommen dann vorteilhafterweise nicht in Berührkontakt mit der Füllmasse.

Um eine positionsgenaue Lage des Hochfrequenzteils und/oder des Niederfrequenzteils zu erreichen, weist das Gehäuse vorteilhafterweise Anlageabschnitte auf. Die Anlageabschnitte können beispielsweise als Vorsprünge oder Stege an den sich an den Gehäuseboden anschließenden Wandungen ausgebildet sein. Die Anlageabschnitte sichern vorteilhafterweise das Hochfrequenz- und/oder das Niederfrequenzteil in axialer und radialer Richtung.

Vorteilhafterweise ist das Gehäuse wenigstens weitgehend vollständig mit Füllmasse aufgefüllt. Dadurch wird neben einer feuchtigkeitsdichten Anordnung der Bauteile des Sensors erreicht, dass die Bauteile in ihrer Einbaulage dauerhaft fixiert werden. Befestigungsmittel, wie beispielsweise Schrauben oder Rastverbindungen, können hierbei entfallen.

Um eine zusätzliche Sicherheit gegen Feuchtigkeit zu erreichen, kann ein Deckel vorgesehen sein, der die Gehäuseöffnung feuchtigkeitsdicht abdeckt. Ein derartiger Deckel kann mit dem Gehäuse beispielsweise verrastet, verklebt, verschweißt oder dergleichen sein. Selbst wenn Feuchtigkeit durch die Fügestelle am Deckel in den Sensor eindringen sollte, ist dies durch das Vorhandensein des Füllmasse für die Funktionsfähigkeit des Sensors belanglos.

Die eingangs genannte Aufgabe wird außerdem durch ein Verfahren zur Herstellung eines Radarsensors gelöst, der sich dadurch kennzeichnet, dass das Hochfrequenzteil und das Niederfrequenzteil des Radarsensors in ein wannenförmiges Gehäuse gegeben werden und anschließend das Gehäuse mit einer Füllmasse vergossen wird. Die Füllmasse füllt hierbei vorteilhafterweise das Gehäuse wenigstens weitgehend vollständig aus. Sie wird vorzugsweise im flüssigen oder teilflüssigen Zustand vergossen und härtet nach dem Vergießen aus. Ein derartiges Verfahren eignet sich insbesondere zur Herstellung eines erfindungsgemäßen Radarsensors.

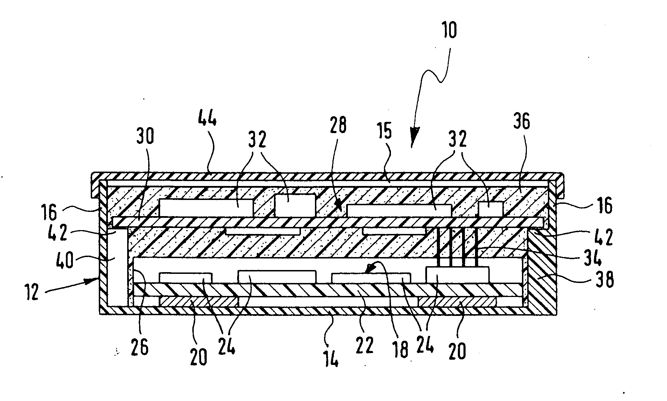

Weitere vorteilhafte Einzelheiten und Ausgestaltungen der Erfindung sind der nachfolgenden Beschreibung zu entnehmen, in der die Erfindung anhand des in der Zeichnung dargestellten Ausführungsbeispiels näher beschrieben und erläutert ist.

In der Figur ist ein erfindungsgemäßer Radarsensor 10 im Längsschnitt dargestellt. Der Radarsensor 10 umfasst ein wannenförmiges Gehäuse 12, das einen Gehäuseboden 14 und sich an den Gehäuseboden 14 weitgehend senkrecht anschließende Wandungen 16 aufweist. Die Oberkanten der Wandungen 16 bilden eine Gehäuseöffnung 15. Das wannenförmige Gehäuse 12 ist vorteilhafterweise aus einem einstückig geformten Kunststoff.

Auf der dem Boden 14 zugewandten Innenseite des Gehäuses 12 ist ein Hochfrequenzteil 18 dargestellt. Das Hochfrequenzteil 18 weist auf seiner dem Gehäuseboden 14 zugewandten Unterseite Hochfrequenz-Patch-Antennen 20 auf.

Die Antennen 20 sind auf der Unterseite einer Hochfrequenzplatine 22 angeordnet. Auf der Oberseite der Hochfrequenzplatine 22 sind elektronische Bauteile 24 vorgesehen. Das Hochfrequenzteil 18 samt Antennen 20 wird von einer Schutzhaube 26 schützend abgedeckt.

Oberhalb des Hochfrequenzteils 18 ist im wannenförmigen Gehäuse 12 ein Niederfrequenzteil 28 vorgesehen. Das Niederfrequenzteil 28 umfasst eine Leiterplatine 30, auf der elektronische Bauteile 32 angeordnet sind . Das Niederfrequenzteil 28 ist über eine Kabel- beziehungsweise Steckerverbindung 34 mit dem Hochfrequenzteil 18 verbunden.

Wie dem Schnitt gemäß der Figur entnommen werden kann, ist das Gehäuse 12 weitgehend vollständig mit Füllmasse 36 aufgefüllt. Die Füllmasse 36, die vorteilhafterweise im flüssigen Zustand in das Gehäuse 12 eingefüllt wird und anschließend aushärtet, verhindert, dass Feuchtigkeit in das Gehäuse 12 eindringen kann und das Hochfrequenzteil 18 oder das Niederfrequenzteil 28 negativ beeinflussen kann. Durch die Füllmasse 36 wird außerdem eine dauerhafte, positionsgenaue Fixierung des Niederfrequenzteils 28 und des Hochfrequenzteils 18 erreicht. Durch Vorsehen der Schutzhaube 26 wird ein negativer Einfluss der Füllmasse 36 auf das empfindliche Hochfrequenzteil 18 ausgeschlossen.

Das Gehäuse 12 sieht Anlageabschnitte 38, 40 vor, die in Form von senkrecht zum Gehäuseboden 14 verlaufenden Stegen ausgebildet sind. Das Hochfrequenzteil 18 wird in einer vordefinierten Lage von oben durch die Gehäuseöffnung 15 in das Gehäuse 12 eingeführt. Daran anschließend wird das Niederfrequenzteil 28 ebenfalls von oben durch die Öffnung 15 eingesetzt. Die Platine 30 kommt hierbei auf Absätzen 42 der Anlageabschnitte 38, 40 in einer vorgegebenen Lage zum Aufliegen. Daran anschließend wird das Gehäuse 12 mit der Füllmasse 36 gefüllt, wodurch das Niederfrequenzteil 28 und das Hochfrequenzteil 18 von der Füllmasse 36 umschlossen wird.

Zur zusätzlichen Sicherung des Radarsensors 10 gegen Feuchtigkeit ist die Gehäuseöffnung 15 durch einen Deckel 44 vollständig abgeschlossen. Der Deckel 44 umgreift an seinen Rändern die Wandungen 16 wenigstens abschnittsweise. Zur dauerhaften Halterung des Deckels 44 kann dieser mit den Wandungen 16 verrastet oder verklebt sein.

## Patentansprüche

1. Radarsensor (10) für ein Fahrzeug, insbesondere zur Anordnung an ein Karosserieteil eines Kraftfahrzeuges, mit einem nach oben offenen, wannenförmigen Gehäuse (12), mit einer auf der Innenseite des Gehäuses (12), im Bereich des Gehäusebodens (14) angeordneten Antenne (20), mit einem mit der Antenne (20) gekoppelten Hochfrequenzteil (18) und mit einem mit dem Hochfrequenzteil (18) verbundenen Niederfrequenzteil (28), wobei das Gehäuseinnere wenigstens teilweise mit einer feuchtigkeitsdichten Füllmasse (36) vergossen ist.

2. Radarsensor (10) nach Anspruch 1, **dadurch gekennzeichnet, dass** das Gehäuseinnere wenigstens weitgehend vollständig mit der Füllmasse (36) vergossen ist.

3. Radarsensor (10) nach Anspruch 1 oder 2, **dadurch gekennzeichnet, dass** das Gehäuse (12) einstückig ausgebildet ist.

4. Radarsensor nach einem der Ansprüche 1, 2, oder 3, **dadurch gekennzeichnet, dass** das Niederfrequenzteil (28) oberhalb des Hochfrequenzteils (18) angeordnet ist.

5. Radarsensor (10) nach einem der vorhergehenden Ansprüche, **dadurch gekennzeichnet, dass** das Hochfrequenzteil (18) eine Hochfrequenzplatine (22) umfasst und dass das Niederfrequenzteil (28) eine Niederfrequenzplatine (30) umfasst, wobei die Hochfrequenzplatine (22) in dem dem Gehäuseboden (14) zugewandten Bereich und die Niederfrequenzplatine (30) oberhalb der Hochfrequenzplatine (22) angeordnet ist.

6. Radarsensor (10) nach einem der vorhergehenden Ansprüche, **dadurch gekennzeichnet, dass** das Hochfrequenzteil (28) von einer Schutzhaube (26) abgedeckt ist.

7. Radarsensor (10) nach einem der vorhergehenden Ansprüche, **dadurch gekennzeichnet, dass** das Gehäuse (12) Anlageabschnitte (38, 40) zur Positionierung des Hochfrequenzteils (18) und/oder des Niederfrequenzteils (28) aufweist.

8. Radarsensor (10) nach einem der vorhergehenden Ansprüche, **dadurch gekennzeichnet, dass** das Gehäuse (12) wenigstens weitgehend vollständig mit der Füllmasse (36) aufgefüllt ist.

9. Radarsensor (10) nach einem der vorhergehenden Ansprüche, **dadurch gekennzeichnet, dass** der Sensor einen Deckel (44) umfasst, der die Gehäuseöffnung (15) vorzugsweise feuchtigkeitsdicht abdeckt.

10. Radarsensor (10) nach Anspruch 9, **dadurch gekennzeichnet, dass** der Deckel (44) durch die Vergussmasse mit dem Gehäuse (12) verklebt ist.

11. Verfahren zur Herstellung eines Radarsensors (10), **dadurch gekennzeichnet, dass** ein Hochfrequenzteil (18) und ein Niederfrequenzteil (28) des Radarsensors (10) in ein wannenförmiges Gehäuse (12) gegeben werden und anschließend das Gehäuseinnere (12) wenigstens teilweise mit einer Füllmasse (36) vergossen wird.

12. Verfahren nach Anspruch 11 zur Herstellung eines Radarsensors (10) nach einem der Ansprüche 1 bis 10.
